# EUROPEAN PATENT APPLICATION

(11) **EP 4 819 496 A1**
(43) Date of publication of application: **07.10.2026**
(21) Application number: 26168557.2
(22) Date of filing: 27.03.2026
(51) Int. Cl.: H04B 1/04

(54) **INTERFERENCE AND INTERMODULATION DISTORTION CANCELLATION USING RADIO FEEDBACK**

(30) Priority: 01.04.2025 US 202519097057
(71) Applicant: NXP USA, Inc, Austin, TX 78735 (US)
(72) Inventor: Lowrance, Asish, 5656AG Eindhoven (NL); Tam, Sai-Wang, 5656AG Eindhoven (NL); Nissim, Brian Jacob, 5656AG Eindhoven (NL)
(74) Representative: Schwarzweller, Thomas

(57) **Abstract**

Interference and Intermodulation Distortion Cancellation is described which includes a transmit power amplifier (PA) having an output including a transmit signal, a subtractor coupled to the output of the transmit PA and configured to receive a sensed signal from the output of the transmit PA, wherein the sensed signal includes the transmit signal, the subtractor configured to subtract a replica transmit signal from the sensed signal to generate an error signal, and an error amplifier coupled to the subtractor to receive the error signal and configured to amplify the error signal, wherein the error amplifier is coupled to the output of the transmit PA.

## Description

### FIELD

The present application relates to interference and intermodulation distortion in a radio transmitter and, in particular, to cancellation on-die using radio feedback.

### BACKGROUND

Wireless data communications interfaces become more common and carry ever more data. Many devices may send and receive multiple different types of radio signals, such as Wi-Fi, cellular, Bluetooth, Near Field Communication (NFC), unlicensed radio systems, and various satellite signals. In addition, newer iterations of WIFI, cellular, and other standards have adopted the use of multiple simultaneous frequences, e.g. Multiple Input Multiple Output (MIMO), and mmWave with sub 6GHz.

When multiple transmitters are simultaneously transmitting from nearby antennas, there may be cross-coupling between transmissions of the transmitters. This may lead to interference and intermodulation distortion. The cross-coupling may occur when both transmitters are on the same integrated circuit or chip, when both transmitters are on the same board or when both transmitters are in close proximity. The cross coupling may occur due to finite coupling between the two transmitters via the antennas, packaging, printed circuit board routing, or on chip routing. Each transmitted signal may be cross coupled into one another at their power amplifier (PA) output. PA cross-coupling is caused by the large PA output that interacts with other PA outputs, especially for nonlinear transistor-based PA designs.

Among the cross-coupling products, third order intermodulation distortion (IMD3) may be large enough to violate regulations limiting out-of-band transmissions. For some applications, the United States Federal Communications Commission has set a limit of - 41 dBm/MHz for such signals. This power coupled into IMD3 signals increases as both transmitters transmit high power signals at the same time.

### SUMMARY

Interference and intermodulation distortion cancellation is described using radio feedback for a transmitter. In an example a circuit comprises a transmit power amplifier (PA) having an output including a transmit signal, a subtractor coupled to the output of the transmit PA and configured to receive a sensed signal from the output of the transmit PA, wherein the sensed signal includes the transmit signal, the subtractor configured to subtract a replica transmit signal from the sensed signal to generate an error signal, and an error amplifier coupled to the subtractor to receive the error signal and configured to amplify the error signal, wherein the error amplifier is coupled to the output of the transmit PA.

Some embodiments include an attenuator coupled to the output of the transmit PA and to the subtractor and configured to reduce a signal swing level of the sensed signal.

In some embodiments, wherein the sensed signal comprises intermodulation distortion with external transmitters, and wherein the error signal is configured to cancel at least a portion of the intermodulation distortion from the output of the transmit PA.

In some embodiments, the error amplifier comprises a differential amplifier configured to reject a second harmonic of the error signal.

Some embodiments include an auxiliary PA coupled to the error amplifier and to the output of the transmit PA to amplify the error signal and provide a cancellation signal to the output of the transmit PA.

In some embodiments, the auxiliary PA comprises multi-gate transistor biasing. In some embodiments, the auxiliary PA provides a a phase opposite of the sensed signal.

Some embodiments include a scaled PA coupled to an input of the transmit PA to sense a transmit PA input signal and configured to amplify the transmit PA input signal to generate the replica transmit signal, the scaled PA being coupled to the subtractor to provide the replica transmit signal to the subtractor.

In some embodiments, the scaled PA uses a much smaller gain function than the transmit PA. Some embodiments include a variable phase shifter coupled between the scaled PA and the subtractor to shift a phase of the replica transmit signal.

Some embodiments include a least means square loop coupled to the error signal and configured to vary a phase of the variable phase shifter, and a phase decision module to select a best phase decision when the error signal is minimized.

Some embodiments include a variable attenuator coupled between the scaled PA and the subtractor to attenuate the replica transmit signal.

In another example, a method comprises receiving a sensed signal from an output of a transmit power amplifier (PA), wherein the sensed signal includes a transmit signal, subtracting a replica transmit signal from the sensed signal to generate an error signal, amplifying the error signal, and injecting the error signal into the output of the transmit PA.

Some embodiments include attenuating the sensed signal by reducing a signal swing level of the sensed signal.

In some embodiments, amplifying the error signal comprises amplifying with a differential amplifier to reject a second harmonic of the error signal.

Some embodiments include reversing a phase of the error signal.

Some embodiments include generating the replica transmit signal by sensing a transmit PA input signal, amplifying the transmit PA input signal to generate the replica transmit signal, shifting a phase of the transmit PA input signal; and providing the replica transmit signal to the subtracting.

In another example, an apparatus comprises means for receiving a sensed signal from an output of a transmit power amplifier (PA), wherein the sensed signal includes a transmit signal, means for subtracting a replica transmit signal from the sensed signal to generate an error signal, means for amplifying the error signal, and means for injecting the error signal into the output of the transmit PA.

Some embodiments include means for adjusting a phase of the replica transmit signal.

Some embodiments include means for varying a phase of the means for adjusting a phase of the replica transmit signal, and means for selecting a best phase when the error signal is minimized.

Other aspects in accordance with the invention will become apparent from the following detailed description, taken in conjunction with the accompanying drawings, illustrated by way of example of the principles of the invention.

### BRIEF DESCRIPTION OF THE DRAWINGS

Fig. 1 is a diagram of a radio environment with multiple antennas and transceivers.
Fig. 2 is a diagram of a transmitter with a circuit including radio feedback for self-interference and intermodulation distortion cancellation in accordance with embodiments of the present disclosure.
Fig. 3 is a process flow diagram of the operation of the circuit in accordance with embodiments of the present disclosure.
Fig. 4 is a diagram of an example configuration of the scaled PA of Fig. 2 in accordance with embodiments of the present disclosure.
Fig. 5 is a diagram of a first example configuration of the error amplifier of Fig. 2 in accordance with embodiments of the present disclosure.
Fig. 6 is a diagram of a second example configuration of the error amplifier of Fig. 2 in accordance with embodiments of the present disclosure.
Fig. 7 is a diagram of an example configuration of the auxiliary PA of Fig. 2 in accordance with embodiments of the present disclosure.
Fig. 8 is a diagram of the radio transmitter of Fig. 2 with an added calibration system in accordance with embodiments of the present disclosure.
Fig. 9 is a process flow diagram of calibrating the replica TX signal generator in accordance with embodiments of the present disclosure.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

Multiple transmitters in the same device and in nearby devices may behave as multiple aggressors to each other and thereby cause multiple cross-coupling products, including intermodulation distortions, e.g., IMD3 among other distortions. A radio feedback architecture as described can overcome some or all of the IMD3 and other cross-coupling artifacts. It is a scalable, modular solution for multi-aggressor scenarios. Feedback may be used to suppress the interference present in a power amplifier (PA) output. To reduce the effect of the feedback loop on the output transmit signal, the transmit signal may be subtracted out from the feedback signal using a scaled power amplifier. The feedback loop may then be completed by an auxiliary PA that injects the feedback signals back into the PA output or the load.

Using this radio feedback architecture, the cross-coupling aggressor tones between multiple simultaneous transmitting power amplifiers may be effectively cancelled out. This may reduce or eliminate the power limits caused by the generation of the IMD3 at the transmitter. Higher power concurrent transmissions are possible from the multiple transmitters without violating a spectrum mask to attenuate the IMD3 from the cross-coupling between multiple transmitters.

The number of radios at different frequency bands that are actively deployed in radio communication systems is increasing. Many wireless devices include Wi-Fi and Bluetooth radios in close proximity or on the same chip. Generations of Wi-Fi continue to add additional frequency bands and modulation schemes. Cellular radio transponders may also be positioned on the same device and even satellite frequencies and modulation schemes may be present. In addition to the intermodulation distortion, the radio may also cause receiver interference in which signals from a radio's receiver interfere with those from the transmitter. It is often not practical to filter out all of these cross-coupling products. While, there are circuits for on-die IMD3 and receiver interference cancellation, these do not work well when the cross-coupling is outside the die or even the device. The feedback circuits described herein address aggressors from many different sources including sources on the same die and sources that are spaced apart from the transmitting device. By cancelling out these cross-coupling effects, high- power concurrent transmission is possible, where it otherwise may not be.

In a full duplex system, the receiver is receiving a signal at the same time that the transmitter is transmitting. This leads to interference when the transmit signal is coupled into the receiver. In this situation the aggressor is the transmitter and the victim is the receiver such that the aggressor desensitizes the victim. In a concurrent transmission system, two different transmitters in the system are transmitting at the same time. Mutual coupling between the two transmitters will create unwanted IMD3 due to non-linearities in the power amplifiers of the transmitters. As a result, there are two aggressors and two victims. The two transmitters are each simultaneously an aggressor against the other and a victim of the other transmitter.

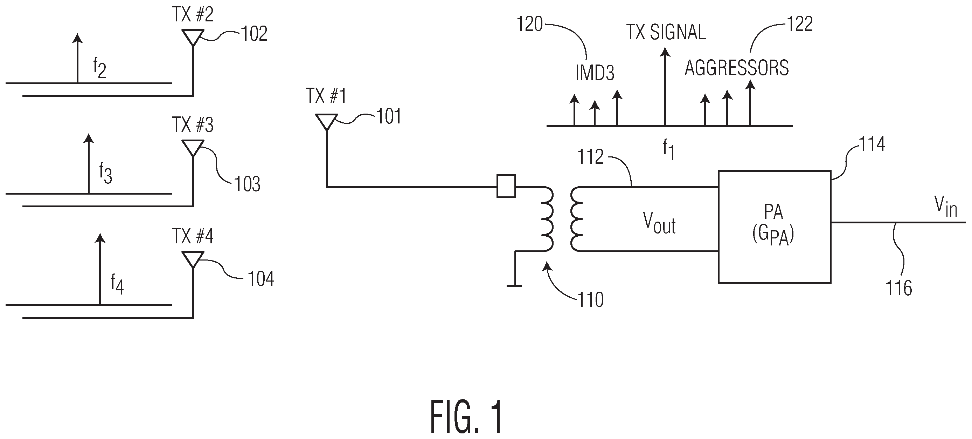

Fig. 1 is a diagram of a radio environment with multiple antennas and transceivers. A first antenna 101 represents a first transceiver that transmits a radio signal f1. The first transceiver has an input signal 116 to be transmitted. The input signal is amplified by a power amplifier PA with amplification gain function GPA to produce an output signal 112. The output signal 112 is applied to a balun transformer 110 and then transmitted by the antenna 101 as the first signal f1.

A second antenna 102 represents a second transceiver that sends a second signal f2. A third antenna 103 represents a third transceiver that transmits a third signal f3 and a third antenna 104 represents a fourth transceiver that transmits a fourth signal f4. The second, third, and fourth transceivers are aggressors against the first transceiver, which is the victim of the other transceivers. The second signal f2, third signal f3, and fourth signal f4 are received by the first antenna 101 and are cross-coupled with the first signal f1 to produce aggressors 122 at the PA 114 output. The aggressors interact with non-linearities in the gain function GPA of the PA to cause the PA to produce IMD3 signals 120. The IMD3 signals 120 are shown as having three components, one for each of the aggressors 122, however, the particular specific nature of the IMD3 signals may vary in response to the nature of the aggressors.

The second, third and fourth transceivers may be a part of the first transceiver, on the same die, on the same device or part of a nearby device. The second, third, and fourth transceivers may send and receive signals that are consistent with Bluetooth, Wi-Fi, cellular, or another narrow-band, constant envelope signal protocol, which may the same as or different from that of the first transceiver. In some examples, the signals may have a narrow bandwidth of approximately 1 MHz and may have a constant envelope signal with frequency and phase modulation only.

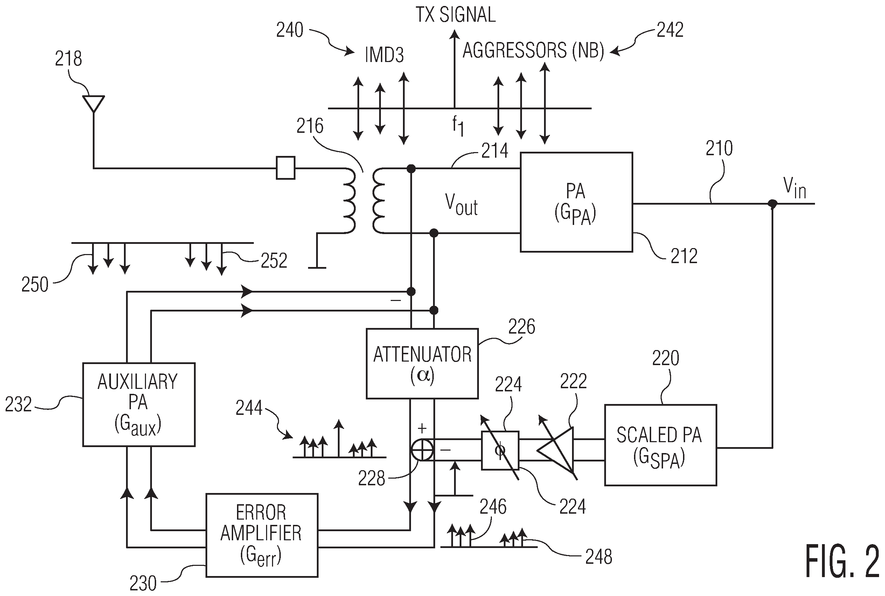

Fig. 2 is a diagram of a transmitter with a circuit including radio feedback for self-interference and intermodulation distortion cancellation. An input signal 210, labeled as Vin is coupled to a transmit power amplifier (TX PA) 212 with a gain function of GPA. The TX PA 212 generates a transmit signal f1 at the TX PA output 214 labeled as Vout. The transmit signal f1 is an amplified version of the input signal 210. The transmit signal f1 is applied through a balun transformer 216 to an antenna 218. The aggressors from other nearby transmitters and other paths that coupled to the antenna 218 interact with the transmit signal, f1, at non-linear nodes of the transmitter. This interaction is especially strong at the TX PA output 814 and the output terminals of the TX PA 812 that connect to the balun transformer 816.

Accordingly, three types of signals at the TX PA output 214 are addressed by a circuit for self-interference and intermodulation distortion cancellation. Other signals may also be addressed in the same or a similar system but are not addressed directly to preserve the simplicity of the description. The first signal is the transmit signal, labeled as f1. The second is the aggressors 242 received from other transmitters. The third are the third order intermodulation distortion signals (IMD3) 240 generated through cross-coupling with the aggressors. All three types of signals are sensed by an attenuator 226 through a coupling from the TX PA 212 output to the attenuator 226. This is the input for the circuit.

The attenuator 226 at the TX PA 212 output is the input to a circuit that forms a feedback loop. The attenuator 226 provides an attenuation to the sensed signal to constrain the signal swing limits. The attenuator 226 reduces the signal swing level and this helps tune the gain of the feedback loop. A linear response at the relevant signal amplitudes improves the effectiveness of the signal cancellation of the feedback loop. The attenuator is coupled to an error amplifier 230 through a subtractor.

The attenuator 226 is coupled to a subtractor 228, e.g. a passive subtractor, to subtract a TX signal replica from the attenuator output. The resulting subtractor output includes only the aggressors 242 and the IMD3 240 from the TX PA output 214. Of course, the content of the signals is not pure and may contain other additional signals, distortions of the intended signals, artifacts of the circuitry, and small levels of any subtracted signals.

The subtractor is coupled to the error amplifier 230. The error amplifier 230 has a wideband gain function of Gerr which is sufficient for application to an auxiliary PA 232 of the feedback loop. In some examples, the error amplifier sets the pole location for stability for the feedback loop. A differential amplifier may be used to provide rejection for the second harmonic of the input signal at the output. The output of the error amplifier 230 is coupled the auxiliary amplifier.

The auxiliary amplifier 232 receives the error amplifier output and applies a gain function of Gaux. The auxiliary PA 232 generates a cancellation signal and is coupled to the PA output 214 to cancel the aggressors 242 and the IMD3 signal 240. The cancellation signal is the output of the circuit. The cancellation is in opposite phase or 180 degrees out of phase from the sensed signal. A linear design improves the effectiveness of the cancellation and also reduces the generation of new IMD3 signals. In some examples, multi-gate transistor (MGTR) biasing may be used as a gain circuit of the auxiliary amplifier for further linearity.

The replica TX signal is generated from another sensed signal. A replica TX signal generator may be described as having a scaled PA 220 coupled to the input TX signal coupled to a variable attenuator 222 and a variable phase shifter 224 to provide the generated replica TX signal to a subtractor of the circuit which operates as a feedback loop. The input signal 210 at the TX PA 212 is sensed and applied to a scaled PA 220 with a gain function of GSPA. The scaled PA 220 generates a replica TX signal using a much smaller gain function than the TX PA. The scaled PA 220 is coupled to a variable attenuator 222 to further reduce the amplitude of the replica TX signal from the scaled PA 220. The variable attenuator 222 allows the feedback of the TX signal to be calibrated by adjusting the attenuation. The variable attenuator 222 is coupled to a variable phase shifter 224 to invert the phase of the replica TX signal. It is this phase inverted, attenuated signal that is applied to the subtractor 229 to remove the TX signal from the feedback signal that is then applied to the error amplifier 230 as described above.

The operation of the feedback loop may be described as the TX signal, the first term in the sum of Eq. 1 combined with the feedback cancellation signal, the second term in the sum of Eq. 1. This may be approximated in an equation as shown in Eq. 1. Any physical circuit may have more interactions and variations in the values with amplitude and frequency than is represented by the example of Eq. 1.${V}_{out} \approx {G}_{PA} {V}_{in} + \frac{1}{1 + T} \left({V}_{agg}+{V}_{IMD 3}\right)$ Eq. 1 Where *Vₒᵤₜ* is the TX signal f1 that is applied to the antenna 218 through the balun transformer 216. *G_{PA}Vᵢₙ* is the amplified TX signal output from the TX PA 212. *T* is the feedback loop gain. *V_{agg}* is the aggressors 242 and *V_{IMD3}* is the third order intermodulation distortion signals 240.

The loop gain may be expressed as shown in Eq. 2.$T = {aG}_{err} {G}_{aux}$ Eq. 2 where *α* is the attenuation of the attenuator 226. *Gₑᵣᵣ* is the gain of the error amplifier 230 and *Gₐᵤₓ* is the gain of the auxiliary PA 232.

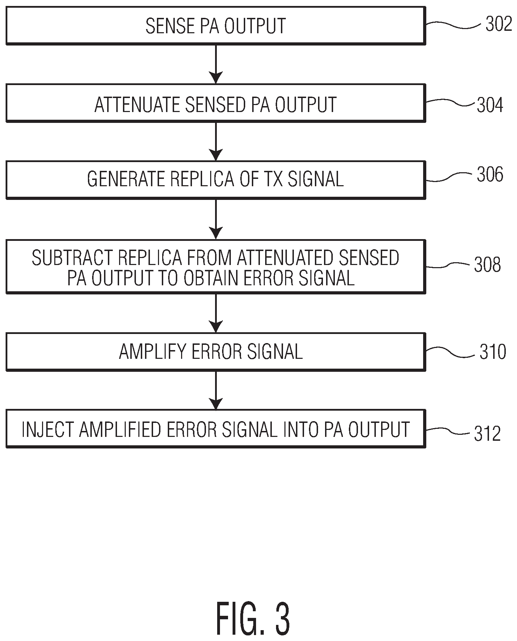

Fig. 3 is a process flow diagram of the operation of the circuit which provides radio feedback for self-interference and intermodulation distortion cancellation for the transmitter of Fig. 2. At 302, the transmit PA output is sensed. An attenuator coupled to an output of the transmit PA is configured to receive a sensed signal from the transmit PA. The sensed signal includes a transmit signal and an interference signal. The interference signal includes intermodulation distortion with external transmitters.

At 304, the sensed transmit PA output is attenuated. The attenuator is configured to receive the sensed PA output and also to attenuate the signal.

At 306 a replica of the transmit signal is generated. A scaled PA is coupled to an input of the transmit PA to sense the transmit PA input signal. The scaled PA is configured to amplify the transmit PA input signal to generate the replica transmit signal. The scaled PA is coupled to a subtractor to provide the replica transmit signal to the subtractor. In some examples, a variable phase shifter is coupled between the scaled PA and the subtractor to shift the phase of the replica transmit signal. The subtractor may then subtract by adding the phase-shifted replica transmit signal to the sensed signal. In some examples, a variable attenuator is coupled between the scaled PA and the subtractor to attenuate the replica transmit signal. In some configurations the variable phase shifter is between the variable attenuator and the subtractor.

At 308, the replica transmit signal is subtracted from the attenuated sensed transmit PA output to obtain an error signal. The subtractor is coupled to the output of the attenuator to receive the sensed signal and to the scaled PA to receive the replica transmit signal. The combination is an error signal. The error signal includes the transmit PA output but not the replica transmit signal so that it primarily contains errors in the transmit PA output. In some examples, these errors are forms of aggressors from other transmitters and IMD3.

At 310 the error signal is amplified. An error amplifier is coupled to the subtractor to receive the error signal and to amplify the error signal as a cancellation signal.

At 312, the amplified error signal or cancellation signal is injected into the transmit PA output. The error amplifier is coupled to the output of the transmit PA to cancel at least a portion of the interference signal from the output of the transmit PA. When the cancellation signal is combined with the transmit PA output, the aggressors and IMD3 are combined with the cancellation signal which will cause significant destructive interference to cancel at least a portion of the interference signals at the transmit PA output.

In some examples, an auxiliary PA is coupled to the error amplifier and to the output of the transmit PA to amplify the cancellation signal and provide the amplified cancellation signal to the output of the transmit PA.

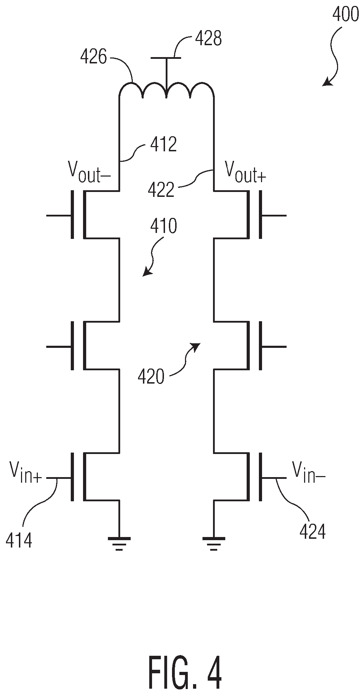

Fig. 4 is a diagram of an example configuration of the scaled PA 220 of Fig. 2. The scaled PA 400 receives the transmit PA input signal 210 at a positive input 414 of a cascode amplifier structure with a 3-transistor voltage ladder 410 on one side. The positive input 414 is a gate of the transistor at the ground side of the voltage ladder 410. The scaled PA provides the replica transmit signal at a negative output signal node 412 at a source of the transistor at the supply side of the voltage ladder 410.

The scaled PA 400 receives the transmit PA input signal 210 at a negative input 424 of a cascode amplifier structure with a 3-transistor voltage ladder 420 on another side. The negative input 424 is a gate of the transistor at the ground side of the transistor voltage ladder 420. The scaled PA provides the replica transmit signal at a positive output node 422 at a source of the transistor at the supply side of the voltage ladder 420. The negative output node 420 and the positive output node 422 are coupled together through an inductor 426 that is coupled to a supply voltage 428.

The scaled PA 400 is shown as a differential cascode amplifier with all transistors formed as metal oxide semiconductor (MOS) field effect transistors (FETs) in a complementary MOS (CMOS) architecture. However, other types of amplifier configurations with other types of transistors in other architectures may be used. The scaled PA 400, as shown, may be configured to be much smaller than the transmit PA 212 of Fig. 2 with a gain and phase that are specifically configured to generate a replica transmit signal suitable for the subtractor 228.

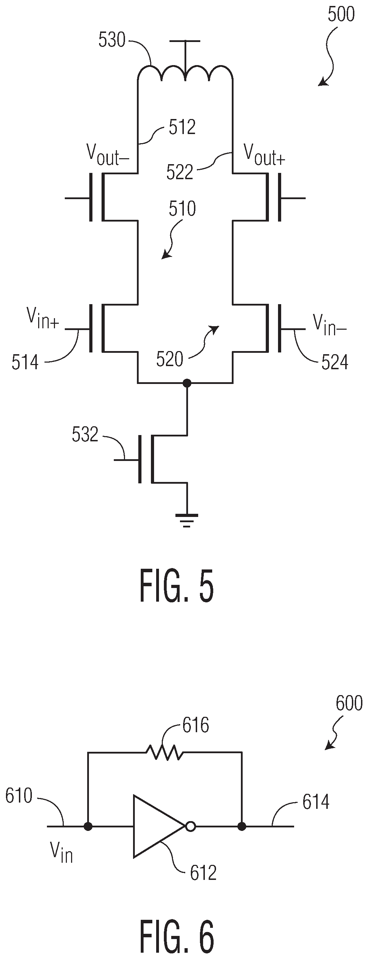

Fig. 5 is a diagram of a first example configuration of the error amplifier 230 of Fig. 2. The error amplifier 500 receives the error signal input at a positive input 514 of a cascode amplifier structure with a 2-transistor voltage ladder 510 on one side. The positive input 514 is a gate of the transistor at the ground side of the voltage ladder 510. The error amplifier 500 provides the amplified error signal at a negative output node 512 at a source of the transistor at the supply side of the voltage ladder 510.

The error amplifier 500 receives the error signal at a negative input 524 of a cascode amplifier structure with a 2-transistor voltage ladder 520 on another side. The negative input 524 is a gate of the transistor at the ground side of the voltage ladder 520. The error amplifier provides the amplified error signal at a positive output node 522 at a source of the transistor at the supply side of the voltage ladder 520. The negative output node 512 and the positive output node 522 are coupled together through an inductor 530 that is coupled to a supply voltage.

The drains of the ground side transistors of each voltage ladder 510, 520 are coupled to a source of a tuning transistor 532. The drain of the tuning transistor is coupled to ground and the gate allows the current through the tuning transistor to be tuned. The differential cascode amplifier provides gain sufficient to provide for effective cancellation at the transmit PA output. The differential structure allows for second order harmonics to be rejected as third order intermodulation distortion signals are amplified.

Fig. 6 is a diagram of a second example configuration of the error amplifier 230 of Fig. 2. In this example, the error amplifier 600 is rendered as a self-biased inverter. An input node 610 receives the error signal and provides it to an inverter 612. An output node 614 provides the amplified error signal at the output of the inverter 612. The output node 614 is coupled through a resistor 616 back to the input node 610. The path through the resistor 616 provides the self-biasing for the inverter 612. In addition, in some examples the resistor 616 has a variable resistance to allow the gain of the error amplifier 600 to be adjusted.

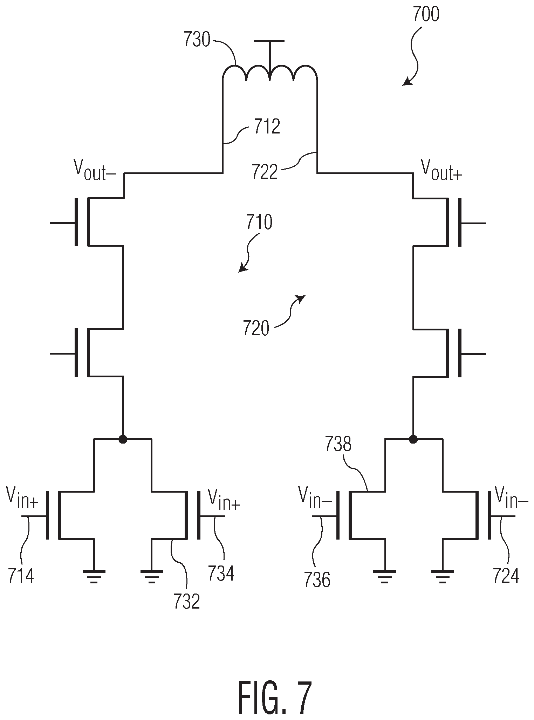

Fig. 7 is a diagram of an example configuration of the auxiliary PA 232 of Fig. 2. The configuration is similar to the scaled PA 400 of Fig. 4 with the addition of multi-gate transistors (MGTR) for the input transistors 732, 738 at the ground side of the voltage ladders 710, 720. The MGTRs further improve the linearity of the gain function and allow for a different gate bias to be applied to the back gates to further adjust the gain function of the auxiliary PA 700.

Considered in more detail, the auxiliary PA 700 receives the error amplifier output signal at a positive input 714 of a cascode amplifier structure with a 3-transistor voltage ladder 710 on one side. The positive input 714 is a gate of the input transistor 732 at the ground side of the voltage ladder 710. A back gate 734 of the input transistor 732 also receives the positive input of the error amplifier output signal. The auxiliary PA 700 provides the amplified error signal as the cancellation signal at a negative output signal node 712 at a source of the transistor at the supply side of the voltage ladder 710.

The auxiliary PA 700 receives the error amplifier output signal at a negative input 724 of a cascode amplifier structure with a 3-transistor voltage ladder 720 on another side. The negative input 724 is a gate of the input transistor 738 at the ground side of the transistor voltage ladder 720. A back gate 736 of the input transistor 738 also receives the negative input of the error amplifier output signal. The auxiliary PA provides the amplified error signal as the cancellation signal at a positive output node 722 at a source of the transistor at the supply side of the voltage ladder 720. The negative output node 720 and the positive output node 722 are coupled together through an inductor 730 that is coupled to a supply voltage. The two drains of the input transistors 732, 738 are coupled to ground.

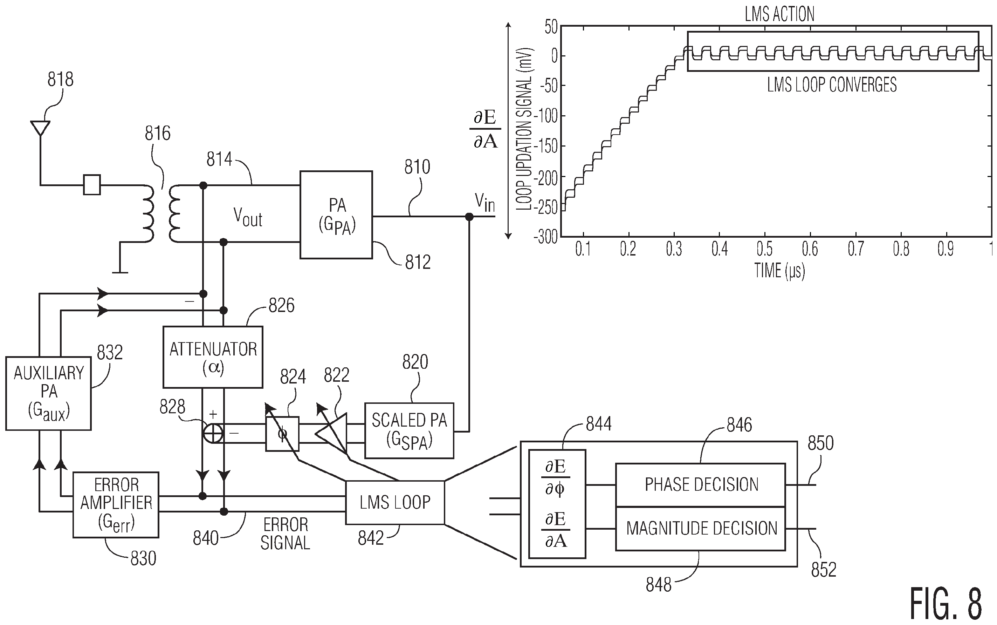

Fig. 8 is a diagram of the radio transmitter of Fig. 2 with an added calibration system. As shown in Fig. 2, the radio transmitter has an input signal *Vin* at an input side of a TX PA 812. The TX PA generates the transmit signal at the TX PA output 814, which is coupled through a balun transformer 816 to an antenna 818. As in Fig. 2, the transmit antenna may also be a receive antenna and coupled to a receiver (not shown). The input signal is also sensed by a scaled PA 820 coupled to the input 810 of the TX PA 812.

The scaled PA 820 amplifies the TX PA input signal to generate a replica TX signal. The scaled PA 820 is coupled to a variable attenuator 822 to attenuate the replica TX signal and the variable attenuator 822 is coupled to a variable phase shifter 824 to shift the phase of the replica TX signal. The variable phase shifter is coupled to a subtractor 828 to subtract the replica TX signal.

A variable attenuator 826 is coupled to an output of the TX PA 812 to receive a sensed signal from the TX PA output 814. The attenuator attenuates the TX PA output 814 and provides it to the subtractor 828 that is coupled to the output of the variable attenuator 826. The subtractor 828 subtracts the replica TX signal from the variable phase shifter from the attenuated TX PA output. The result from the subtractor 828 is an error signal. The error signal contains an interference signal including intermodulation distortion and signals from external transmitters. The transmit signal has been canceled out of the error signal at least in part by the subtractor 828.

The error signal is applied to an error amplifier 830 coupled to the subtractor 828 to receive the error signal and amplify it. The error amplifier is coupled to the TX PA output 814 through an auxiliary PA 832. The auxiliary PA 832 is coupled to the TX PA output 814 and amplifies the error signal to generate the cancellation signal and provide the cancellation signal at the TX PA output 814. This is the output of the circuit, the input of which is the sensed TX PA output 814.

For calibration, the variable attenuator 822 and the variable phase shifter 824 may be adjusted to provide the most effective cancellation of the TX signal in the error signal. The error signal 840 from the subtractor is coupled to a Least Means Square (LMS) loop 842. The LMS loop 842 is provided to a time derivative function 844. The time derivative function derives an energy over phase *ϕ* (∂E/∂*ϕ*) and an energy over attenuation *A* (∂*E*/∂*A*) from the error signal 840. The time derivatives are applied to respective decision modules.

A phase decision module 846 receives the time phase derivative (∂E/∂*ϕ*) and selects a best phase decision as the LMS loop varies the phase of the variable phase shifter 824 and sends a phase decision 850 when the error signal is minimized. A magnitude decision module 848 receives the time attenuation derivative (∂*E*/∂*A*) and selects a best magnitude decision as the LMS loop varies the attenuation of the variable attenuator 822 and sends a magnitude decision when the error signal is minimized.

The graph shows that as the LMS loop 842 varies the attenuation the time attenuation derivative (∂*E*/∂*A*) of the error signal converges to a best attenuation value. A loop updation signal in millivolts represents the time attenuation derivative (∂*E*/∂*A*) of the error signal on the vertical axis and the LMS Action over time in microseconds is shown on the horizontal axis. As the variable attenuator 826 is swept through a range of different amounts of attenuation, the time attenuation derivative (∂*E*/∂*A*) converges to a continuous average peak value after time 0.3 microseconds and before 0.4 microseconds. A similar graph may be made for the time phase derivative (∂E/∂ϕ) and used to show how sweeping the variable phase shifter 824 through a range results in a continuous average peak value. The values in millivolts and time are provided as examples to show the operation of the calibration using the LMS loop. Different circuits and different signals may produce different values for the signal and change over time with a sweep through the calibration values.

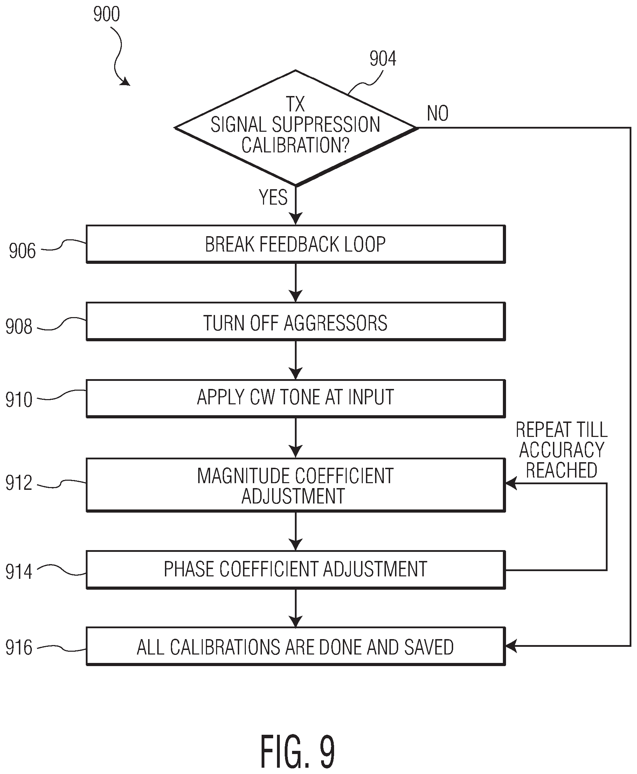

Fig. 9 is a process flow diagram of calibrating the replica TX signal generator. In operation the LMS loop may be used for calibration when the transmitter is at rest. The process 900 begins with a TX signal suppression calibration decision block 904. If the calibration decision is no then the process skips the calibration process and goes to then end operation at 916. If the calibration decision is yes, then the process goes to a first operation to break the feedback loop at 906. The feedback loop is broken to prevent the cancellation signal from entering into the calibration process. In an example the output of the auxiliary PA 832 may be switched off. Alternatively, the output of the error amplifier 830 may be switched off so that there is no signal into the auxiliary PA. Breaking the feedback loop prevents the cancellation signal from being injected into the TX PA output 814 where it may be sensed at the variable attenuator 826.

At 908 aggressors are turned off. If the die or system has other radio transmitters that are aggressors to the radio transmitter, then these are turned off. This eliminates the entry of other radio signals as aggressors and cross-products, such as intermodulation distortion into the TX PA output 814. As a result, the signal from the TX PA input 810 is the primary influence for the signal at the TX PA output 814. At 910 a continuous wave (CW) tone is generated and applied as the input signal to the TX PA input 810. This CW tone will be amplified by the TX PA 812 to the TX PA output 814. The CW tone is then the sensed signal at the variable attenuator 826 that is applied to the subtractor 828. The replica TX signal generator is then calibrated to minimize the error signal of the subtractor 828.

At 912, the magnitude coefficient is adjusted. The LMS loop is operated with a constant phase coefficient at the variable phase shifter as the magnitude coefficient of the variable attenuator 822 sweeps through a range. As the LMS loop converges on a best magnitude result, the corresponding magnitude coefficient is set.

At 914, the phase coefficient is adjusted. The LMS loop is operated with the constant magnitude coefficient from 912 at the variable attenuator as the phase coefficient of the variable phase shifter 824 sweeps through a range. As the LMS loop converges on a best phase result, the corresponding phase coefficient is set. The process repeats from 914 to 912 to adjust the magnitude coefficient at 912 and the adjust the coefficient at 914 until the intended accuracy is reached. This may include a first coarse adjustment followed by a second fine adjustment. In some examples, three or more repeats are performed. The process 900 then moves to 916 at which all calibrations are done and the coefficients are saved. The system may then close the feedback loop and turn on the aggressors and any other radio transmitters.

Although the configurations of the structures herein are shown and described in a particular order, the order of the structures of each example may be altered and additional component may be added to add additional operations or functionality that may be performed in addition to the operations and functions described herein.

Embodiments of the invention may be implemented entirely in analog hardware, digital hardware, a combination of analog and digital hardware, or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A circuit comprising:
a transmit power amplifier, PA, having an output including a transmit signal;
a subtractor coupled to the output of the transmit PA and configured to receive a sensed signal from the output of the transmit PA, wherein the sensed signal includes the transmit signal, the subtractor configured to subtract a replica transmit signal from the sensed signal to generate an error signal; and
an error amplifier coupled to the subtractor to receive the error signal and configured to amplify the error signal, wherein the error amplifier is coupled to the output of the transmit PA.

2. The circuit of claim 1, further comprising an attenuator coupled to the output of the transmit PA and to the subtractor and configured to reduce a signal swing level of the sensed signal.

3. The circuit of claim 1 or 2, wherein the sensed signal comprises intermodulation distortion with external transmitters, and wherein the error signal is configured to cancel at least a portion of the intermodulation distortion from the output of the transmit PA.

4. The circuit of claim 3, wherein the error amplifier comprises a differential amplifier configured to reject a second harmonic of the error signal.

5. The circuit of any preceding claim, further comprising an auxiliary PA coupled to the error amplifier and to the output of the transmit PA to amplify the error signal and provide a signal to the output of the transmit PA.

6. The circuit of claim 5, wherein the auxiliary PA comprises multi-gate transistor biasing.

7. The circuit of claim 5 or 6, wherein the auxiliary PA provides a phase opposite of the sensed signal.

8. The circuit of any preceding claim, further comprising a scaled PA coupled to an input of the transmit PA to sense a transmit PA input signal and configured to amplify the transmit PA input signal to generate the replica transmit signal, the scaled PA being coupled to the subtractor to provide the replica transmit signal to the subtractor.

9. The circuit of claim 8, wherein the scaled PA uses a much smaller gain function than the transmit PA.

10. The circuit of claim 8 or 9, further comprising a variable phase shifter coupled between the scaled PA and the subtractor to shift a phase of the replica transmit signal.

11. The circuit of claim 10, further comprising:
a least means square loop coupled to the error signal and configured to vary a phase of the variable phase shifter; and
a phase decision module to select a best phase decision when the error signal is minimized.

12. The circuit of any of claims 8 to 11, further comprising a variable attenuator coupled between the scaled PA and the subtractor to attenuate the replica transmit signal.

13. A method comprising:
receiving a sensed signal from an output of a transmit power amplifier, PA, wherein the sensed signal includes a transmit signal;
subtracting a replica transmit signal from the sensed signal to generate an error signal;
amplifying the error signal; and
injecting the error signal into the output of the transmit PA.

14. The method of claim 13, further comprising attenuating the sensed signal by reducing a signal swing level of the sensed signal.

15. The method of claim 13, wherein amplifying the error signal comprises amplifying with a differential amplifier to reject a second harmonic of the error signal.
